# EUROPEAN PATENT SPECIFICATION

(11) **EP 0 638 227 B1**
(45) Date of publication and mention of the grant of the patent: **11.11.1998**
(21) Application number: 94111915.8
(22) Date of filing: 29.07.1994
(51) Int. Cl.: A01C 23/00

(54) **Trailing hose system for liquid manure vehicle**
Schlauchsystem für Jauchefass
Dispositif à tubes trainants pour épandeur de purin

(30) Priority: 09.08.1993 DK 91893
(43) Date of publication of application: 15.02.1995
(73) Proprietor: Sörensen, Harry, DK-6818 Ärre (DK)
(72) Inventor: Sörensen, Harry, DK-6818 Ärre (DK)
(74) Representative: Hansen, Kaj

(56) References cited:
- DE-A- 4 136 162
- DE-U- 8 910 777
- GB-A- 2 251 166

## Description

The present invention relates to a trailing hose system of the kind described in the introductory part of claim 1.

Such a trailing hose system is known from GB-A-2 251 166.

It is a drawback in the said known system that the flow of liquid manure out into the trailing hoses is pulsating, and uneven and that there is a great loss of pressure in the system. The individual connecting hoses between the cutting distributor and the trailing hoses have to be bent in order to be connected to the cutting distributor, which results in a heavy wear on the hoses each time the booms are swung up alongside the liquid manure tank vehicle and back again. Furthermore, the knife function in the cutting distributor is insufficient, wherefore the system easily clogs up with bits of straw which are present in the liquid manure.

It is the purpose of the present invention to define a trailing hose system without the drawbacks of the known systems. This is achieved by embodying a trailing hose system of the kind described in the introductory part of claim 1 as stated in the characterizing part of the claim.

This ensures that the cutting distributor can be fitted with the cutter plate facing the connecting hoses so that the hoses can be mounted without sharp bends. The top end of the hoses at the cutting distributor is under atmospheric pressure internally, whereby the liquid manure is passed through the hoses in an even flow with a minimum pressure drop. Furthermore, a self-sharpening effect on the cutter ring is achieved by the excentric movement of the latter in relation to the cutter plate, whereby the straw pieces in the liquid manure are effectively shredded.

Claim 2 relates to a preferred embodiment of a cutting distributor for a trailing hose system according to the invention in which the cutting distributor is embodied with a cutter plate and a belonging cutter ring.

Claim 3 relates to a preferred embodiment of a cutting distributor for a trailing hose system according to the invention in which the cutting distributor is embodied with two cutter plates with belonging cutter rings.

Claim 4 relates to a preferred placing of air admission openings to the cutting distributor of a trailing hose system according to the invention.

According to the description in claim 5 any liquid manure leaking into the innermost, air-filled space, is hurled outward towards the outlet openings.

According to the description in claim 6 the boom is kept in an essentially horizontal position and as far as possible follows roughnesses in the terrain, and that when the booms are raised and folded up on the side of liquid manure vehicle after the finished spreading, they are inclined in the upward direction away from the suspension mount, so that any possible remaining liquid manure stays in the hoses during transportation.

According to the description in claim 7 it is ensured that the trailing hoses do not break on contact with the ground.

The invention is explained in detail below with reference to the drawing in which
- fig. 1: is a rear view of a liquid manure vehicle with a trailing hose system according to the invention,
- fig. 2: is a perspective view of a liquid manure cart with a trailing hose system according to the invention,
- fig. 3: is a perspective view of parts of a cutting distributor of a trailing hose system according to the invention,
- fig. 4: is a schematic illustration of a vertical section through a cutting distributor of a trailing hose system according to the invention,

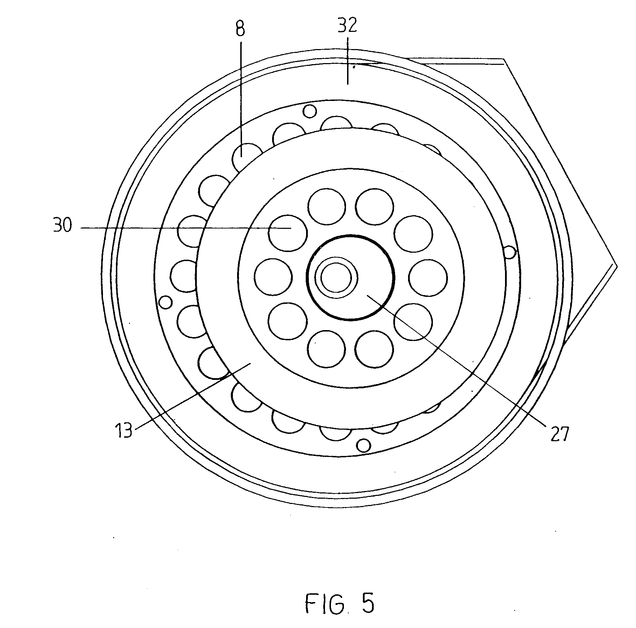

- fig. 5: shows a cutting distributor for a trailing hose system according to the invention seen from above with the top cover removed,
- fig. 6: shows a section after the line I-I in fig. 4,
- fig. 7: is a side view of a suspension arrangement of a trailing hose system according to the invention in which the boom is in its lowered working position,
- fig. 8: shows the same details as fig. 7, but the boom is here in the raised position,
- fig. 9: is a perspective view of the suspension arrangement shown in fig. 8,
- fig. 10: is a section of the lowest part of a trailing hose with a built-in steel rod,
- fig. 11: is a side view of a liquid manure vehicle with a trailing hose system according to the invention and with one boom swung up along the side of the liquid manure vehicle.

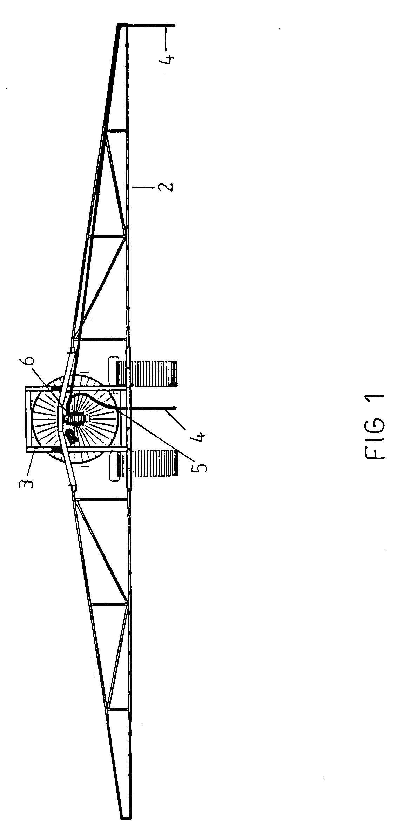

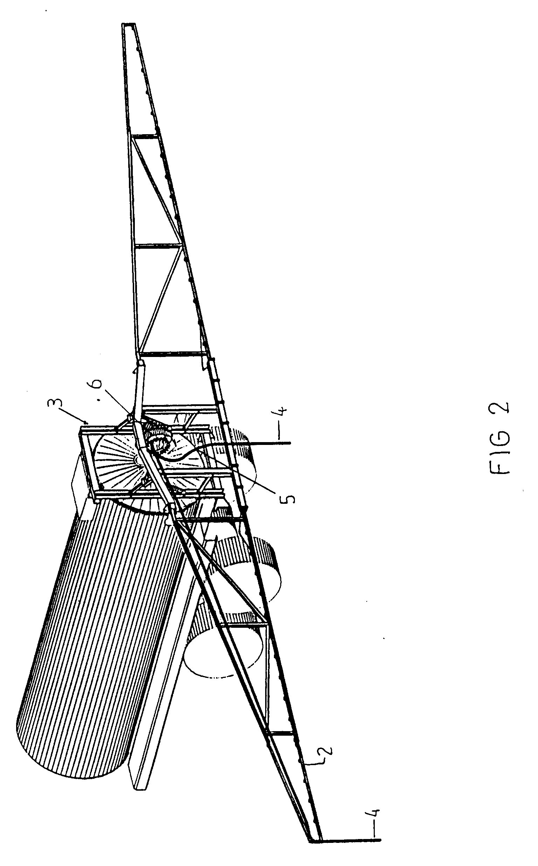

As shown in figs. 1 and 2 a trailing hose system according to the kind described in the application consists of a spreading boom 2 mounted on a liquid manure vehicle 1 by a mount 3. Below the spreading boom 2 are mounted a number of trailing hoses 4 which by means of connecting hoses 5 are connected to a cutting distributor which is supplied with liquid manure from the liquid manure vehicle by means of a not shown pump.

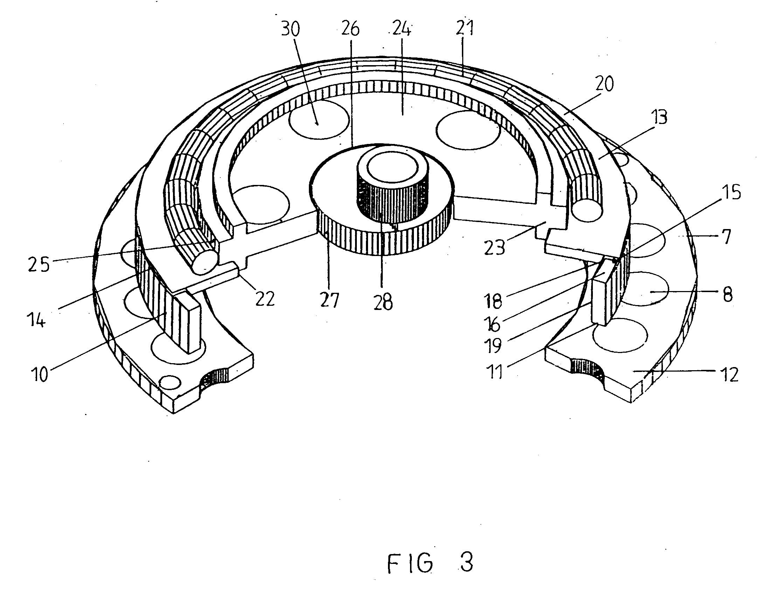

As shown in fig. 3 a cutting distributor 6 of a hose system according to the invention consists of a cutter plate 7 with a number of outlet holes for liquid manure 8 which preferably have a uniform diameter and are arranged with a definite mutual distance. The number of holes 8 corresponds to the number of trailing hoses 4. At the holes 8 the cutting distributor 6 is embodied with connecting pieces 9 for the hoses 5. Above the cutter plate 7 is mounted a cutter ring 10 which has a plane under side 11 and which can be displaced on the likewise plane upper side 12 of the cutter ring 7. On top of the cutter ring 10 is mounted a piston 13 shaped as a cylindrical ring, which along its outside edge 14 on the under side is embodied with a recess or a groove with a horizontal surface 15 making full contact against a plane upper side 16 of the cutter ring 10, and with a vertical surface 18 making full contact against the internal, vertical edge 19 of the cutter ring 10. On its upper side the piston 13 is actuated by a downward directed spring force, for example from an O-ring 21, whereby the cutter ring 10 is forced down against the cutter plate 7. The internal edge 22 of the piston 13 is loosely meshing with the external side on a ring-shaped rib 23, which is mounted on the under side of a circular plate 24 a distance behind the outermost edge 25 of the same. At its centre the plate 24 has a circular cut-out 26 in which an excentric 27 on a shaft 28 can be accommodated. The shaft 28 is coupled to a drive motor 29.

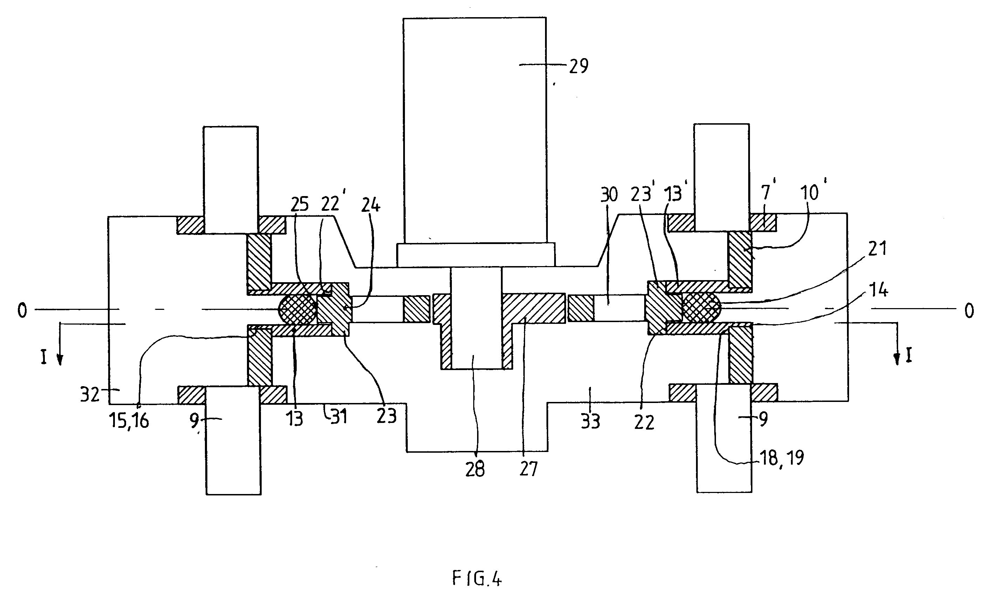

As shown in fig. 4 the circular plate 24 can have an upper side embodied with a rib 23', which is placed above and has the same dimension as the rib 23. On top of the plate 24 is mounted another piston 13' whose innermost edge 22' is meshing with the the rib 23'. The piston 13' is embodied identical with the piston 13, but mounted laterally reversed - round a central plane o-o through the plate 24 - in relation to it. The piston 13' is meshing with another cutter ring 10', which comes to rest against another cutter plate 7'.

The circular plate 24 is embodied with a number of air holes 30.

As shown the parts are built into a housing 31 consisting of a first, closed chamber 32 outside the cutter rings 10,10' and a second, closed chamber 33 inside the cutter rings 10,10'. The chamber 32 is supplied with liquid manure, and the chamber 33 receives air through the openings 30.

When the shaft 28 rotates, a cutter ring 10 will open and close for admission of liquid manure to all outlet holes 8. Furthermore, air is supplied to all outlet holes so that the atmospheric pressure reigns in the uppermost part of the hoses 5. As a consequence of this a hose 4,5 will be emptied of liquid manure even if access for liquid manure is barred through the belonging outlet hole 8. The resist ance in the system is therefore at a minimum and the throughput of liquid manure at a maximum.

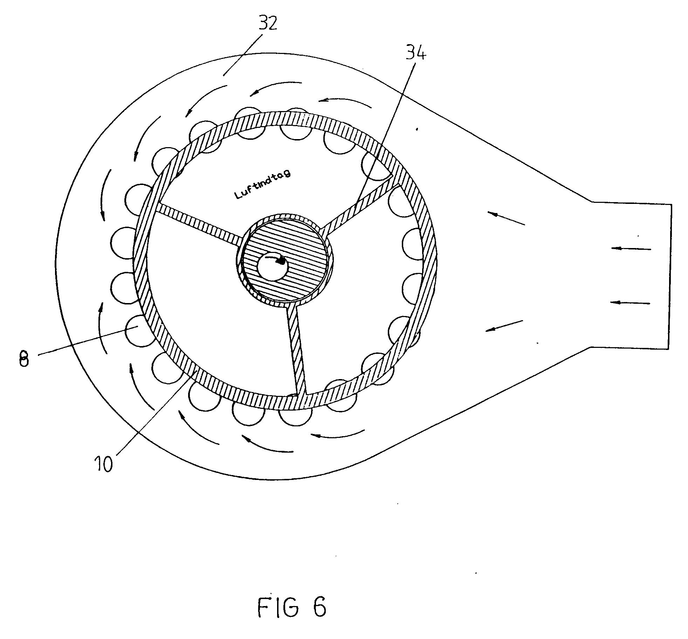

As shown in fig. 6 the chamber 33 can incorporate a number of wings 34, which are mounted on and participate in the rotation of the shalt 28. Thereby any possible liquid manure, which may have leaked into the chamber 33, is hurled outwards towards the periphery and away through the outlet holes 8.

As shown in figs. 1 and 2 the cutting distributor 6 can be mounted with the outlet holes 8,8' facing each towards its own end of a boom, when the booms are swung out in their working position. Hereby the hoses 5 can be inserted in the cutting distributor without sharp bends or curves, whereby the resistance is reduced and it is prevented that the hoses are damaged or suffer too much stress during use.

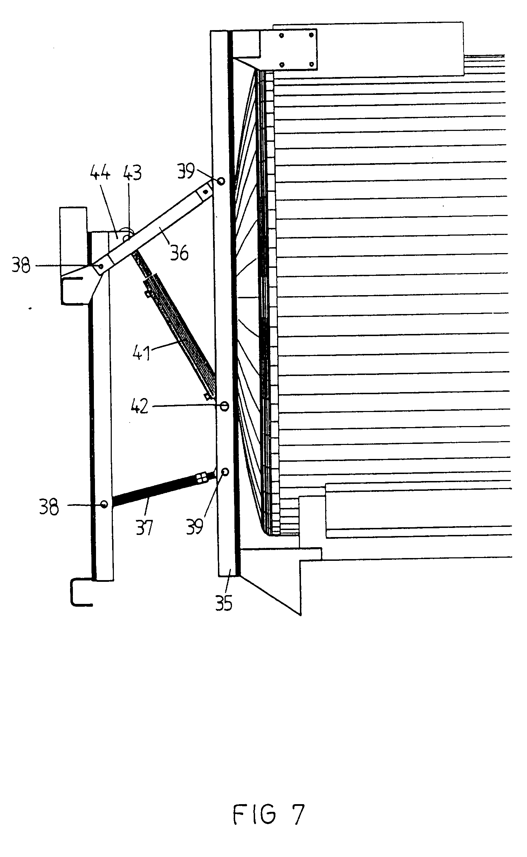

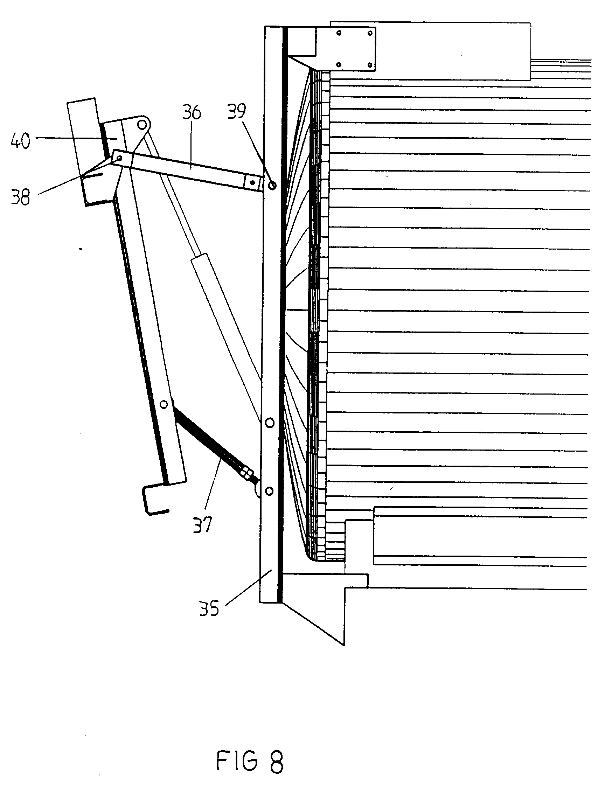

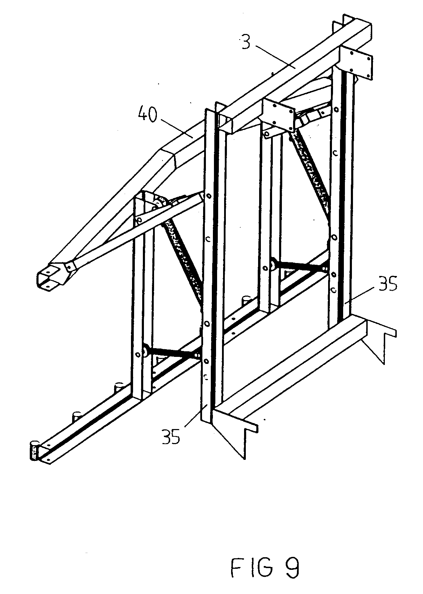

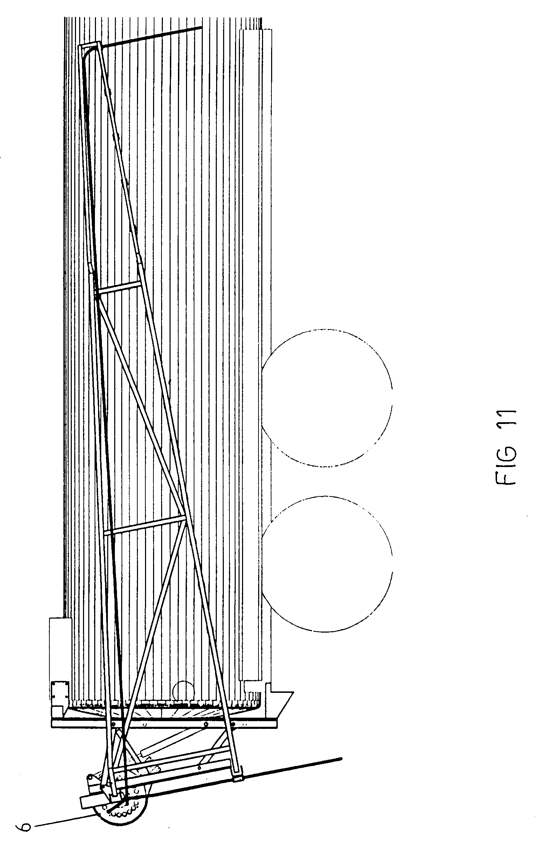

As shown in figs. 7-9 the mount 3 can consist of two parallel, vertical sectional irons 35. The frame 40 of the trailing hose system is attached to each sectional iron 35 by means of two approximately parallel guide rods 36 and 37 which are swingably attached to the frame 40 and to a sectional iron 35 by means of pins 38 and 39, respectively. The rod 37 is adjustable lengthwise and shorter than the rod 36. The frame 40 can be raised and lowered by means of two hydraulic cylinders 41 which at each end are swingably hinged on a pin 42 to a sectional iron 35 and in the piston rod end are swingably hinged on a pin 43 to a mount 44 on the frame 40. The compression side of the two cylinders 41 are mutually connected. The booms are therefore held in the horizontal position irrespective of roughnesses in the terrain. When the frame 40 is in its lowered position it will, as shown in fig. 7, be vertical. When it is in its raised position it will, as shown in fig. 8 be inclined backwards, whereby the booms, when they are swung up on the side of the liquid manure vehicle, take up the position shown in fig. 11, in which the booms are slightly inclined rearwards so that any possible remaining liquid manure stays in the hoses.

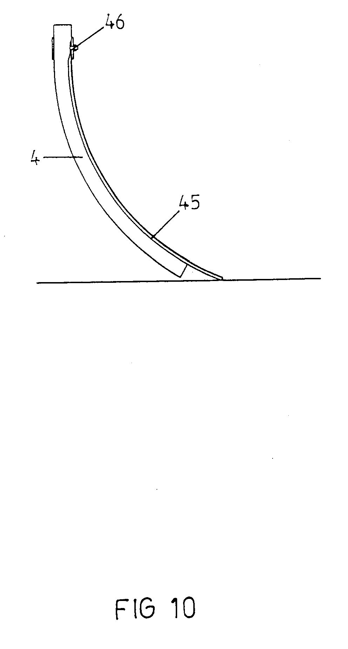

As shown in fig. 10 the lowest end of each trailing hose 4 can be fitted with a steel rod 45, for example of spring steel, which is attached to a hose 4by a rivet or bolt connection 46, and which at the bottom end protrudes a short distance outside the hose. This steel rod prevents the hose from breaking on contact with the ground.

The shown and described embodiments are only meant to serve as an example of the invention. Within the framework of the invention various modifications can be imagined. For example, the spring force may be supplied in ways other than by means of an O-ring.

## Claims

1. Trailing hose system which is mounted on a liquid manure vehicle (1) by means of a mount (3) and which comprises a spreading boom (2) with a number of trailing hoses (4) and a cutting distributor (6), which through hoses (5) is connected to the trailing hoses (4), **characterized** in that the cutting distributor (6) comprises at least one cutter plate (7) with a number of outlet holes (8) for connection of hoses (5) and a belonging cutter ring (10), whose thickness is less than the diameter of a hole (8) and which has a plane side (11), which comes to rest against a plane surface (12) of the cutter plate (7), means (13,21) to hold the cutter ring (10) thrust into contact with the cutter plate (7) and means (13,24,27) to give the cutter ring (10) an excentric movement, whereby the openings (8) are opened and closed all the way round, that the cutter plate (7) and the cutter ring (10) are built into a housing (31) in such a way that the area outside the cutter ring (10) is embodied as a first chamber (32) to which liquid manure is supplied, and that the area inside the cutter ring (10) is embodied as second chamber (33) which is under ambient atmospheric pressure, and that the cutting distributor preferably is placed at a level so that the liquid manure is led from the cutting distributor through the hoses (5) and (4) by a free fall.

2. Trailing hose system according to claim 1, **characterized** in that the cutting distributor (6) comprises a pressure plate or a piston (13) shaped as a cylinder ring whose outside edge (14) on the under side has a turned recess with a horizontal surface (15) coming to rest against side (16) opposite the plane surface (11) of the cutter ring (10), and with a vertical surface (18), which rests against the internal, vertical edge (19) adjoining the side (16) of the cutter ring (10), which piston (13) on its upper side (20) is actuated by a spring force, for example from an O-ring (21), in the direction against the cutter plate (7), and which along the internal edge (22) is loosely meshing with a vertical, ring-shaped rib (23) which is mounted on the under side of and a distance behind the outer edge (25) of a circular plate (24), which at its centre has a circular-section opening (26) which is meshing with an excentric (27) on a shaft (28), which is coupled to a drive motor (29).

3. Trailing hose system according to claim 1 **characterized** in that the circular plate (24) on its upper side is embodied with a second rib (23') which is placed vertically over and has the same dimensions as the rib (23), that on top of the plate (24) is fitted a second piston (13') whose internal edge (22') is meshing with the rib (23'), and a second cutter ring (10') and a second cutter plate (7') which has the same dimensions as the piston (13), the cutter ring (10) and the cutter plate (7), respectively, but is laterally reversed in relation to it round a central plane (o-o) through the plate (24), and that be-tween the pistons (13) and (13') an O-ring (21) is mounted, which - when the parts are assembled and tightened - supplies the necessary elastic force which keeps the cutter rings (10) and (10') forced against the cutter plates (7) and (7'), respectively.

4. Trailing hose system according to claims 1-3, **characterized** in that the plate (24) inside the rib (23) is embodied with a number of air holes (30).

5. Trailing hose system according to claims 1-3, **characterized** in that a number of wings (34) are rigidly fitted to the shaft (28) are mounted in the chamber (33).

6. Trailing hose system according to claims 1-3, **characterized** in that the mount (3) is embodied as two parallel, vertical rods (35) at a distance from each other, and that the frame (40) of the trailing hose system is attached to each sectional iron (35) by two approximately parallel guide rods (36) and (37) which are swingably attached to the frame (40) and a sectional iron (35) by pins (38) and (39), respectively, that the lower rod (37) is a little shorter that the upper (36) and that the frame 40) can be raised and lowered by means of two hydrolic cylinders (41), which each at the cylinder end is swingably hinged to a sectional iron (35) by a pin (42) and at the piston rod end to a mount (44) at the top of the frame (40) by a pin (43), and that the pressure sides of the cylinders (41) are mutually connected.

7. Trailing hose system according to claims 1-3, **chacterized** in that a steel rod (45) is fitted inside the lowest portion of each trailing hose (4).

## Patentansprüche

1. Schleppschlauchsystem, das durch einen Beschlag (3) an einen Gülletankwagen (1) montiert ist und ein Feldspritzgestänge (2) umfasst, mit einer Anzahl Schleppschläuchen (4) und einem Schnittverteiler (6), der durch Schläuche (5) mit Schleppschläuchen (4) verbunden ist, dadurch **gekennzeichnet**, dass der Schnittverteiler (6) Wenigstens eine Schneidplatte (7) mit einer Anzahl Abflusslöchern (8) umfasst zwecks Anschluss von Schläuchen (5) und einem entsprechenden Schneidring (10), dessen Dickte kleiner ist als der Durchmesser eines Lochs (8) und welcher eine flache Seite (11) hat, die sich an eine flache Seite (12) der Schneidplatte (7) anlehnt, Mittel (13, 21) um den Schneidring (10) an die Schneidplatte (7) anzudrücken und Mittel (13, 24, 27) um den Schneidring (10) eine exzentrische Bewegung beizubringen, wodurch die Öffnungen (8) um und um geöffnet und gesperrt werden, dass die Schneidplatte (7) und der Schneidring (10) so in ein Gehäuse (31) eingebaut sind, dass das Gebiet ausserhalb des Schneidringes (10) ausgeformt ist wie eine geschlossene, erste Kammer (32), der Gülle zugeführt wird, und dass das Gebiet innerhalb des Schneidringes (10) ausgeformt ist wie eine andere Kammer (33), die mit der Atmosphäre in Verbindung ist, und dass der Schnittverteiler vorzüglich in einer solchen Höhe angebracht ist, dass die Gülle vom Schnittverteiler durch die Schläuche (5) und (4) im freien Fall geleitet wird.

2. Schleppschlauchsystem dem Anspruch 1 entsprechend, dadurch **gekennzeichnet,** dass der Schnittverteiler (6) eine Druckplatte oder einen Kolben (13) umfasst, der die Form eines Zylinderringes hat, dessen äussere Kante (14) auf der Unterseite einen nach unten gerichteten Einschnitt mit einer waagerechten Fläche (15) hat, welche an die der flachen Seite (11) gegenüberliegende Seite (16) des Schneidringes (10) anliegt, und mit einer senkrechten Fläche (18), die an die an die Seite (16) anstossende, innere, senkrechte Kante (19) am Schneidring (10) anliegt, welcher Kolben (13) an der Oberseite (20) von einer Federkraft beeinflusst ist, beispielsweise von einem 0-Ring (21), in Richtung Schneidplatte (7), und entlang der inneren Kante (22) los in eine senkrechte, ringförmige Rippe (23) eingreift, die an der Unterseite und ein Stückchen hinter der äussersten Kante (25) an eine kreisförmigen Platte (24) montiert ist, welche in ihrem Zentrum im Querschnitt eine kreisförmige Öffnung (26) hat, die in eine Exzentrik (27) an einer Achse (28), die an einen Antriebsmotor (29) gekoppelt ist, eingreift.

3. Schleppschlauchsystem dem Anspruch 1 entsprechend, dadurch **gekennzeichnet**, dass die kreisförmige Platte (24) an der Oberseite mit einer anderen Rippe (23') versehen ist, die sich senkrecht über der Rippe (23) befindet und die gleiche Dimension hat, dass auf der Platte (24) ein anderer Kolben (13') montiert ist, dessen innerste Kante (22') in die Rippe (23') eingreift, einen anderen Schneidring (10') und eine andere Schneidplatte (7'), welche die gleichen Dimensionen haben wie der Kolben (13), der Schneidring (10), beziehungsweise die Schneidplatte (7), aber spiegelverkehrt um ein Zentralniveau (o-o) durch die Platte (24) angebracht, und dass zwischen den Kolben (13) und (13') ein 0-Ring (21) montiert ist, der, wenn die Teile zusammengespannt sind, die notwendige Federkraft liefert, der die Schneidringe (10) und (10') an die Schneidplatten, (7) bzw. (7') herandrückt.

4. Schleppschlauchsystem dem Anspruch 1-3 entsprechend, dadurch **gekennzeichnet,** dass die Platte (24) innerhalb der Rippe (23) mit einer Anzahl Luftlöcher (30) versehen ist.

5. Schleppschlauchsystem dem Anspruch 1-3 entsprechend, dadurch **gekennzeichnet**, dass in der Kammer (33) eine Anzahl Flügel (34) montiert sind, die fest an der Achse (28) montiert sind.

6. Schleppschlauchsystem dem Anspruch 1-3 entsprechend, dadurch **gekennzeichnet**, dass der Beschlag (3) wie zwei in Abstand voneinander angebrachten parallelen, senkrechten Stangen (35) ausgeformt ist, und dass das Stativ (40) des Schleppschlauchsystems an jedem Profileisen (35) mittels zwei annähernd parallelen Führungsstangen (36) und (37) befestigt ist, die schwenkbar an das Stativ (40) und ein Profileisen (35) an Zapfen, (38) bzw. (39), befestigt sind, dass die unterste Stange (37) etwas kürzer ist als die oberste (36), und dass die Stative (40) mit Hilfe von zwei hydraulischen Zylindern (41) gehoben und gesenkt werden können, welche jeweils an den Zylinderenden schwenkbar an ein Profileisen (35) an einen Zapfen (42) angeschlagen sind und am Ende der Kolbenstange an einen Beschlag (44) oberhalb des Statives (40) an einem Zapfen (43), und dass die Druckseiten des Zylinders (41) miteinander verbunden sind.

7. Schleppschlauchsystem dem Anspruch 1-3 entsprechend, dadurch **gekennzeichnet**, dass in jedem Schleppschlauch (4) im untersten Stück eine Stahlstange (45) montiert ist.

## Revendications

1. Système de tuyaux traînants monté sur une tonne à lisier (1) à l'aide d'une garniture (3) et comportant une rampe d'épandage (2) avec des tuyaux traînants (4) et un distributeur hacheur (6), relié aux tuyaux traînants (4) à l'aide de tuyaux (5), **caractérisé** en ce que le distributeur hacheur (6) comporte au moins une plaque à couper (7) avec un certain nombre d'orifices d'écoulement (8) pour le raccordement de tuyaux (5) et un anneau à couper (10), dont l'épaisseur est inférieur au diamètre d'un orifice (8), et qui comporte un côté plan (11), qui porte sur un côté plan (12) de la plaque à couper (7), des moyens (13, 21) pour maintenir l'anneau à couper (10) pressé contre la plaque à couper (7) et des moyens (13,14,27) pour donner à l'anneau à couper (10) un mouvement excentrique, ayant pour effet que les orifices (8) s'ouvrent et se ferment sur toute la circonférence, que la plaque à couper (7) et l'anneau à couper (10) ont été incorporés dans un carter (31) de manière que la zone se trouvant à l'extérieur de l'anneau à couper (10) a été conçue comme une première chambre fermée (32), vers laquelle est conduit le lisier, et que la zone se trouvant à l'intérieur de l'anneau a couper (10) a été conçue comme une seconde chambre (33), qui est en contact avec l'atmosphère, et que le distributeur hacheur est placé de préférence à une hauteur permettant que le lisier est conduit depuis le distributeur hacheur à travers les tuyaux (5) et (4) en chute libre.

2. Système de tuyaux traînants selon la revendication 1, **caractérisé** en ce que le distributeur hacheur (6) comporte une plaque de pression ou un piston (13) en forme d'un anneau cylindrique, dont le bord extérieur (14) est muni sur la face inférieure d'un épaulement décolleté avec une surface horizontale (15), qui porte sur le côté opposé (16) du côté plan (11) de l'anneau à couper (10), et avec une surface verticale (18), qui porte sur le bord vertical intérieur (19) joint au côté (16) de l'anneau à couper (10), lequel piston (13) est actionné sur la face supérieure (20) par l'effet de ressort par exemple d'un anneau en O (21), dans le sens de la plaque à couper (7), et qui le long du bord intérieur (22) engrène avec une nervure annulaire verticale (23), montée sur la face intérieure et à une certaine distance du bord extérieur (25) d'une plaque circulaire (24), munie près du centre d'une ouverture circulaire en coupe (26), qui engrène avec un excentrique (27) d'un arbre (28), accouplé à un moteur d'entraînement (29).

3. Système de tuyaux traînants selon la revendication 1, **caractérisé** en ce que la plaque circulaire (24) est munie sur la face supérieure d'une autre nervure (23'), placée verticalement au-dessus de la nervure (23), et ayant la même dimension que la nervure (23), que la face supérieure de la plaque (24) est munie d'un autre piston (13'), dont le bord intérieur (22') engrène avec la nervure (23'), d'un autre anneau à couper (10') et d'une autre plaque à couper (7'), dont la dimension est la même que celle du piston (13), de l'anneau à couper (10) et de la plaque coupante (7) respectivement, mais qui sont placés symétriquement à la position de ceux-ci autour d'un plan central (o-o) à travers la plaque (24), et qu'entre les pistons (13) et (13') se trouve un anneau en O (21), qui fournit, quand les pièces sont assemblées, l'effet de ressort nécessaire pour presser les anneaux à couper (10) et (10') contre les plaques à couper, (7) et (7') respectivement.

4. Système de tuyaux traînants selon les revendications 1-3, **caractérisé** en ce que la plaque (24) à l'intérieur de la nervure (23) a été conçue avec un certain nombre de prises d'air (30).

5. Système de tuyaux traînants selon les revendications 1-3, **caractérisé** en ce que dans la chambre (33) ont été montées un certain nombre d'ailes (34), qui ont été fixées sur l'arbre (28).

6. Système de tuyaux traînants selon les revendications 1-3, **caractérisé** en ce que la garniture (3) a été conçue comme deux barres verticales parallèles placées à une certaine distance l'une de l'autre (35), et que le châssis (40) du système de tuyaux traînants a été fixé à chaque fer profilé (35) près de deux barres de guidage approximativement parallèles (36) et (37), fixées de manière à pouvoir pivoter au châssis (40) et à un fer profilé (35) à l'aide de goujons (38) et (39) respectivement, que la barre inférieure (37) est un peu plus courte que la barre supérieure (36), et que le châssis (40) peut être soulevé et abaissé à l'aide de deux cylindres hydrauliques (41), dont l'extrémité cylindre a été fixée par charnière de manière à pouvoir pivoter à un fer profilé (35) à l'aide d'un goujon (42), et dont l'extrémité tige de piston a été fixée à une garniture (44) placée en haut sur le châssis (40) à l'aide d'un goujon (43), et que les côtés pression des cylindres (41) sont reliés l'un à l'autre.

7. Système de tuyaux traînants selon les revendications 1-3, **caractérisé** en ce que dans chaque tuyau traîant (4) une barre d'acier (45) a été montée sur la partie inférieure.
